# EUROPEAN PATENT APPLICATION

(11) **EP 1 580 635 A2**
(43) Date of publication of application: **28.09.2005**
(21) Application number: 05006548.1
(22) Date of filing: 24.03.2005
(51) Int. Cl.: G05D 16/04

(54) **Fluid pressure regulator**

(30) Priority: 26.03.2004 JP 2004092085
(71) Applicant: Surpass Industry Co., Ltd., Saitama (JP)
(72) Inventor: Igarashi, Hiroki, Gyoda-shi Saitama (JP)
(74) Representative: Klingseisen, Franz

(57) **Abstract**

A fluid pressure regulator is compact in construction even when a fluid pressure measurement portion (6) is included, capable of performing a precise measurement of the fluid pressure in a fluid transporting line, and free from making a mistake in measurement operation. The regulator is provided with: a fluid pressure regulator portion (5); a main fluid passage (2) penetrating through a base (1) of the regulator; and, a fluid inlet port (3) and a fluid outlet port (4) each connected with a fluid transporting line to extend in opposite directions from opposite sidewalls of the base (1). The regulator portion (5) is installed in the base (1) together with the fluid pressure measurement portion (6) that is disposed in parallel to the regulator portion (5) in the base (1). The fluid pressure measurement portion (6) is preferably disposed in the side of the fluid outlet connection port (4).

## Description

### BACKGROUND OF THE INVENTION

### 1. Field of the Invention

The present invention relates to a fluid pressure regulator, and more particularly to a fluid pressure regulator incorporated in a fluid transporting line to receive a fluid, for example such as a liquid chemical used in a semiconductor manufacturing process, supplied from a reservoir or supply tank and deliver the fluid at a predetermined pressure for subsequent handling.

### 2. Description of the Related Art

In general, the fluid pressure regulator is connected with a fluid transporting line, and manually or pneumatically, or mechanically operated to control or regulate the fluid pressure. In performing such operation of the regulator, it is necessary for a user or operator to confirm the fluid pressure to be controlled or regulated. Due to this necessity, the fluid pressure gauge or sensor is required to be provided in the upstream side or in the downstream side of the regulator.

In the conventional type of fluid pressure regulator such as ones disclosed in Japanese Patent No.: 3323513 and Japanese Patent application Laid-Open Nos.: Hei 8-192091 and Hei 3-97639, in order to realize the in-line connection of the regulator with the fluid transporting line, it is necessary for the regulator to use a coupler. An additional coupler is also required to in-line connect each of a fluid pressure gauge, a fluid pressure sensor and like fluid pressure measurement devices. Each of these couplers require its own installation space.

Further, since each of the liquid pressure measurement devices is provided in a position slightly separated from the regulator in the upstream side or in the downstream side of the regulator, some pressure loss is produced between the regulator and each of the liquid pressure measurement devices. Due to the presence of such pressure loss, it is not possible for the regulator to perform a precise measurement of the fluid pressure.

Further, in the case where a plurality of regulators and their fluid pressure measurement devices are provided in parallel to each other, there is a fear that the user confuses the subject one of the regulators with the other ones, which leads to making a mistake in measurement operation of the regulators.

### SUMMARY OF THE INVENTION

Under such circumstances, the present invention was made to solve the problems inherent in the conventional fluid pressure regulator. Consequently, it is an object of the present invention to provide an in-line type fluid pressure regulator that is compact in construction, capable of saving an installation space thereof, and capable of performing a precise measurement of the fluid pressure in the fluid transporting line without any fear of making a mistake in measurement operation.

The above object of the present invention is accomplished by providing:

A fluid pressure regulator comprising:
a base member (1) provided with both a regulator portion (5) and a fluid pressure measurement portion (6);
a main fluid passage (2) penetrating through the base member (1); and
a fluid inlet connection port (3) and a fluid outlet connection port (4) both of which extend outward in opposite directions from opposite sidewalls of the base member (1) and are communicated with the main fluid passage (2).

In the fluid pressure regulator having the above construction, preferably the fluid pressure measurement portion (6) is disposed in the downstream side of the regulator portion (5) of the fluid pressure regulator.

Further, preferably the fluid pressure measurement portion (6) is constructed of a fluid pressure gauge.

Still further, preferably the fluid pressure measurement portion (6) is constructed of a fluid pressure sensor.

Preferably, the fluid pressure measurement portion (6) is manually operated.

Further, preferably the fluid pressure measurement portion (6) is mechanically operated.

Still further, preferably the fluid pressure measurement gauge (6) is provided with a fluid pressure introducing portion (10) in its lower end portion; and, the fluid pressure introducing portion (10) is welded or bonded to a socket opening (9), the socket opening (9) being provided on a branched fluid passage (7) which branches off from the main fluid passage (2), whereby the fluid pressure gauge (6) is fixedly mounted on the base member (1).

Preferably, the branched fluid passage (7) is smaller in diameter than the main fluid passage (2).

The above object of the present invention is also accomplished by providing:

A fluid pressure regulator comprising:
a base member (1) provided with both a regulator portion (5) and a port (27) through which a fluid pressure measurement portion (6) is connected with the base member (1), the port (27) communicating with a main fluid passage (2);
the main fluid passage (2) penetrating through the base member (1); and
a fluid inlet connection port (3) and a fluid outlet connection port (4) both of which extend outward in opposite directions from opposite sidewalls of the base member (1) and are communicated with the main fluid passage (2).

In the fluid pressure regulator having the above construction, preferably the fluid pressure measurement portion (6) is connected with the port (27) through a tube (28).

Further, preferably the fluid pressure measurement portion (6) is constructed of a fluid pressure gauge.

Still further, preferably the fluid pressure measurement portion (6) is constructed of a fluid pressure sensor.

Preferably, the branched fluid passage (7) is smaller in diameter than the main fluid passage (2).

Further, preferably the fluid pressure regulator portion (5) is manually operated.

Still further, preferably the fluid pressure regulator portion (5) is mechanically operated.

### BRIEF DESCRIPTION OF THE DRAWINGS

The above and other objects, advantages and features of the present invention will be more apparent from the following description taken in conjunction with the accompanying drawings in which:
Fig. 1 is a front view of a first embodiment of the fluid pressure regulator according to the present invention;
Fig. 2 is a partially broken front view of the first embodiment of fluid pressure regulator shown in Fig. 1, illustrating the essential components of the regulator in longitudinal section;
Fig. 3 is a front view of a second embodiment of the fluid pressure regulator according to the present invention;
Fig. 4 is a longitudinal sectional view of the second embodiment of the present invention shown in Fig. 3;
Fig. 5 is a plan view of the second embodiment of the regulator of the present invention shown in Fig. 3;
Fig. 6 is a plan view of a third embodiment of the fluid pressure regulator according to the present invention;
Fig. 7 is a front view of the third embodiment of the present invention shown in Fig. 6; and
Fig. 8 is a fourth embodiment of the fluid pressure regulator according to the present invention.

### DETAILED DESCRIPTION OF THE PREFERRED EMBODIMENTS

The best modes for carrying out the present invention will be described in detail using embodiments of the present invention with reference to the accompanying drawings, wherein the reference numerals which will be used in the following descriptions denote the following elements and portions: the reference numeral 1 denotes a base member; 2 denotes a main fluid passage; 3 denotes a fluid inlet connection port; 4 denotes a fluid outlet connection port; 5 denotes a fluid pressure regulator portion; 6 denotes a fluid pressure gauge or measurement portion; 7 denotes a branched passage; 8 denotes a gauge mount; 9 denotes a socket opening; 10 denotes a fluid pressure introducing portion; 11 denotes a cap-shaped handle; 21 denotes a fluid pressure sensor; 22 denotes a diaphragm; 23 denotes a fluid pressure sensor; 24 denotes a sensor casing; 25 denotes a cord; 27 denotes a port; and, 28 denotes a tube.

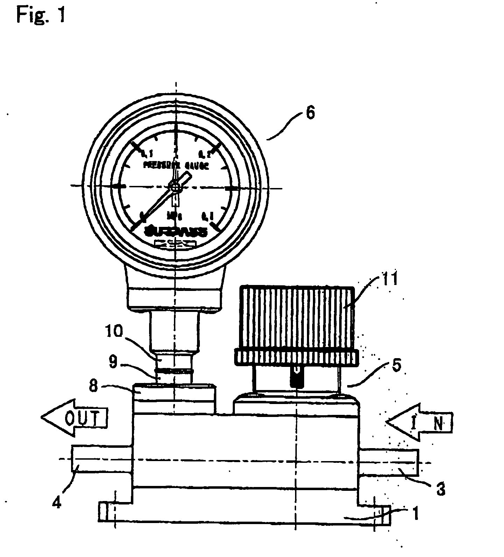

Fig. 1 shows a front view of a first embodiment of a fluid pressure regulator according to the present invention.

As is clear from Fig. 1, the first embodiment of the regulator of the present invention is provided with a base member 1 in its bottom portion. On the other hand, this base member 1 is provided with a main fluid passage 2 which penetrates through the base member 1 of the regulator.

The main fluid passage 2 of the regulator communicates with each of a fluid inlet connection port 3 and a fluid outlet connection port 4 both of which are connected with a fluid transporting line. These connection ports 3, 4 extend laterally outward from opposite sidewalls of the base member 1 in opposite directions. More specifically, as viewed in Fig. 1, the inlet connection port 3 and the outlet connection port 4 are oppositely disposed from each other to extend in the right and the left direction, respectively. Fixedly mounted on the base member 1 are a regulator portion 5 and a fluid pressure measurement portion 6.

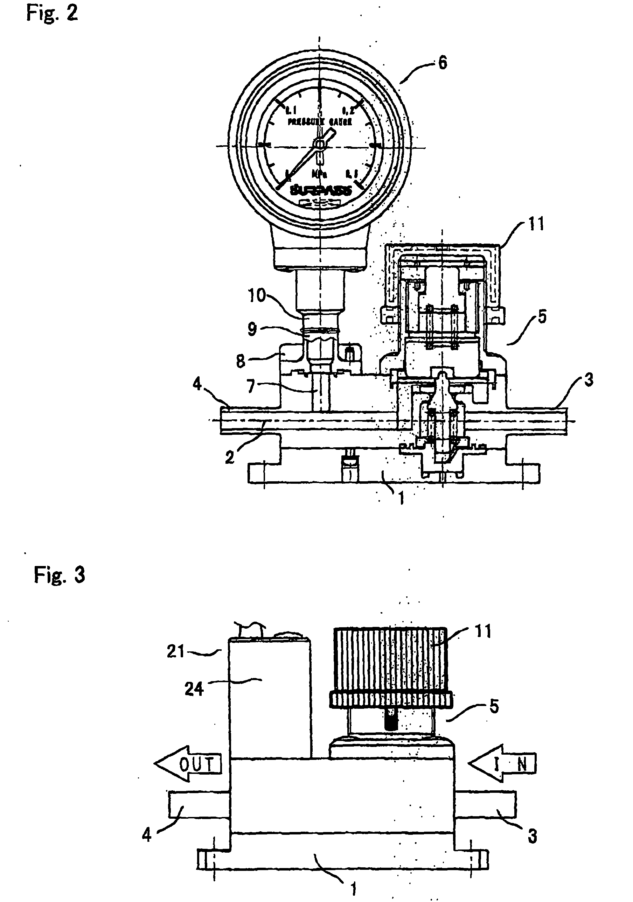

The first embodiment of the present invention shown in Figs. 1 and 2 employs a fluid pressure gauge 6, which forms the above-mentioned fluid pressure measurement portion. More specifically, in the first embodiment, a branched fluid passage 7 branches off from the main fluid passage 2 to penetrate through an upper portion of the base member 1. Fixedly mounted on an upper end portion of this branched fluid passage 7 is a gauge mount 8, which extends upward. The gauge mount 8 is provided with a socket opening 9 in its central portion.

Preferably, the branched fluid passage 7 is smaller in diameter than the main fluid passage 2 in order to protect the fluid pressure measurement means such as the fluid pressure gauge 6 and like components from a so-called "water hammer", "pulsations" and like fluid impacts.

The fluid pressure gauge 6 may be constructed from a conventional"Bourdon tube" type circular-shaped pressure indicator and the like. This pressure gauge 6 is provided with a fluid pressure introducing portion 10 in its lower portion. The fluid pressure introducing portion 10 is equal in size to the socket opening 9. The pressure gauge 6 has its pressure introducing portion 10 butt-jointed with the socket opening 9 of the base member 1 so as to be fixedly mounted on the base member 1 through such butt jointing process. As for the above-mentioned butt joint formed between the socket opening 9 and the pressure introducing portion 10, it is possible to form such a butt joint by a welding process or using an adhesive, for example. Although the pressure gauge 6 can be disposed in the upstream side (i.e., the side of the inlet connection port 3) of the regulator, preferably the pressure gauge 6 is disposed in the downstream side (i.e., the side of the outlet connection port 4) as shown in the drawings.

The regulator portion 5 shown in the drawings is provided with a cap-shaped handle 11. An outer peripheral surface of the handle 11 is knurled to facilitate a user's manual turning operation of the handle 11. More specifically, in operation, the handle 11 is turned manually by the user so as to control or regulate a fluid pressure of a fluid passing through the main fluid passage 2. It is also possible to operate the regulator portion 5 pneumatically or mechanically.

In the regulator portion 5, its fluid pressure control is performed by the user who watches a level of the fluid pressure indicated by the pressure gauge 6. In controlling the fluid pressure of the regulator portion 5, since the subject pressure gauge 6 is disposed adj acent to the corresponding regulator portion 5, watching of the subject pressure gauge 6 is readily performed without any confusion of the subject pressure gauge 6 with those 6 of other regulators 5.

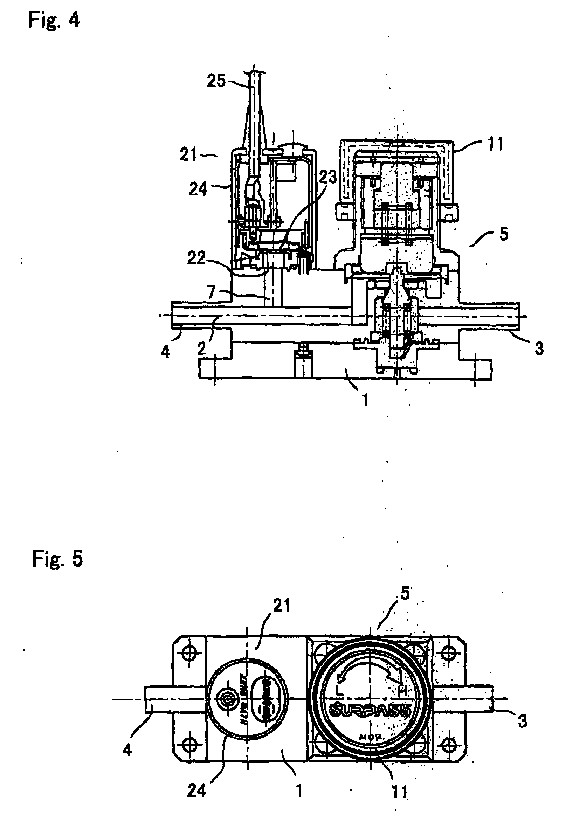

In the second embodiment of the fluid pressure regulator according to present invention shown in Figs. 3 to 5, the fluid pressure measurement portion 6 of the second embodiment is realized by a fluid pressure sensor 21. In this second embodiment, a sensor casing 24 of the sensor 21 is fixedly mounted on the branched fluid passage 7, as is clear from Fig. 4. The sensor casing 24 is provided with a measurement portion in which a fluid pressure sensor 23 is disposed. More specifically, the sensor 23 is disposed through a diaphragm 22 that is brought into contact with the fluid. In this case, preferably the branched fluid passage 7 is smaller in diameter than the main fluid passage 2 based on the same reasons as those already described in the above.

A signal, which represents a level of the fluid pressure and is issued from the fluid pressure sensor 23, is transmitted through a cord 25 to a monitor (not shown) disposed'outside the sensor casing 24 and displayed in the monitor in digitized form. Control or regulation of the fluid pressure performed by means of the regulator portion 5 is performed by the user watching the monitor in the same manner as that of the second embodiment described above.

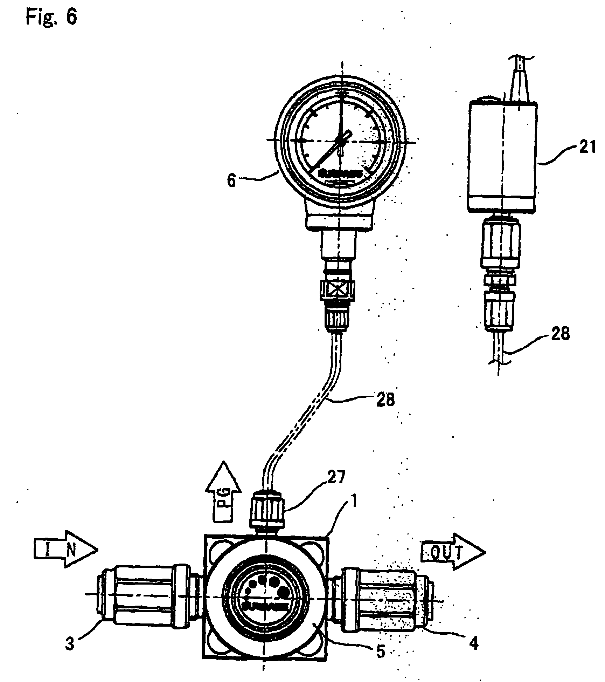

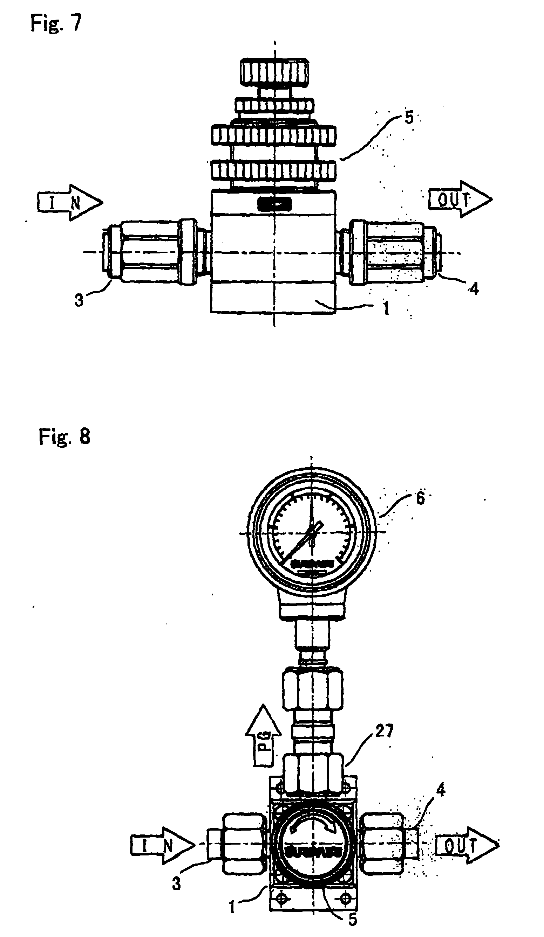

A third embodiment of the fluid pressure regulator according to the present invention is shown in Figs. 6 and 7, and provided with the base member 1 in its bottom portion. On the other hand, the base member 1 of the regulator is provided with the main fluid passage 2 penetrating through the base member 1 of the regulator. The main fluid passage 2 communicates with each of the fluid inlet connection port 3 and the fluid outlet connection port 4 both of which are connected with fluid transporting line. These connection ports 3, 4 extend laterally outward from opposite sidewalls of the base member 1 in opposite directions. More specifically, as viewed in Fig. 7, the inlet connection port 3 and the outlet connection port 4 are oppositely disposed from each other to extend in the right and the left direction in Fig. 7, respectively. Fixedly mounted on the base member 1 are the regulator portion 5 and a port 27 that communicates with the main fluid passage 2, through which port 27 the fluid pressure measurement portion 6 is connected with the base member 1 of the regulator.

In this third embodiment of the regulator of the present invention shown in Figs. 6 and 7, the port 27 communicating with the main fluid passage 2 extends upward from the upperwall of the base member 1, as viewed in Fig. 6. The fluid pressure gauge 6 or sensor 21 may be used as the fluid pressure measurement portion 6 of the third embodiment of the present invention.

In this third embodiment, it is possible to dispose the fluid pressure gauge 6 or sensor 21 in any desired location remote from the regulator portion 5 so as not to permit the pressure gauge 6 or sensor 21 to interfere with the regulator portion 5 in operation, by simply extending the entire length of a tube 28 through which the fluid pressure gauge 6 or sensor 21 is communicated with the main fluid passage 2 to measure a value or level of the fluid pressure and display the thus measured pressure value on the gauge 6 or sensor 21.

Fig. 8 shows a fourth embodiment of the fluid pressure regulator according to the present invention. In this fourth embodiment, the pressure gauge 6 or fluid pressure sensor 21 is directly connected with the port 27 without using the tube 28. The fourth embodiment is employed only in the case where ample space for the gauge 6 or sensor 21 is obtained around the regulator portion 5.

Even in the third and the fourth embodiment shown in Figs. 6 to7 and 8, respectively, preferably each of the fluid passage formed in the port 27 and the tube 28 is smaller in diameter than the main fluid passage 2 so as to protect the fluid pressure measurement means or portion such as the fluid pressure gauge 6 and the fluid pressure sensor 21 from the "waterhammer", "pulsations" and like fluid impacts.

While the present invention has been particularly shown and described in detail with reference to the preferred embodiments thereof, it will be understood by those skilled in the art that various changes or modifications in form and details may be made therein without departing from the spirit and scope of the present invention as defined by the appended claims.

Finally, the present application claims the Convention Priority based on Japanese Patent Application No. 2004-92085 filed on March 26, 2004, which is herein incorporated by reference.

## Claims

1. A fluid pressure regulator comprising:
a base member (1) provided with both a regulator portion (5) and a fluid pressure measurement portion (6);
a main fluid passage (2) penetrating through said base member (1) ; and
a fluid inlet connection port (3) and a fluid outlet connection port (4) both of which extend outward in opposite directions from opposite sidewalls of said base member (1) and are communicated with said main fluid passage (2).

2. The fluid pressure regulator as set forth in claim 1, wherein said fluid pressure measurement portion (6) is disposed in the downstream side of said regulator portion (5).

3. The fluid pressure regulator as set forth in claim 1, wherein said fluid pressure measurement portion (6) is constructed of a fluid pressure gauge.

4. The fluid pressure regulator as set forth in claim 1, wherein said fluid pressure measurement portion (6) is constructed of a fluid pressure sensor.

5. The fluid pressure regulator as set forth in claim 1, wherein said fluid pressure measurement portion (6) is manually operated.

6. The fluid pressure regulator as set forth in claim 1, wherein said fluid pressure measurement portion (6) is mechanically operated.

7. The fluid pressure regulator as set forth in claim 3, wherein: said fluid pressure measurement gauge (6) is provided with a fluid pressure introducing portion (10) in its lower end portion; and, said fluid pressure introducing portion (10) is welded or bonded to a socket opening (9), said socket opening (9) being provided on a branched fluid passage (7) which branches off from said main fluid passage (2), whereby said fluid pressure gauge (6) is fixedly mounted on said base member (1).

8. The fluid pressure regulator as set forth in claim 3, wherein said branched fluid passage (7) is smaller in diameter than said main fluid passage (2).

9. A fluid pressure regulator comprising :
a base member (1) provided with both a regulator portion (5) and a port (27) through which a fluid pressure measurement portion (6) is connected with said base member (1), said port (27) communicating with a main fluid passage (2) ;
saidmainfluidpassage (2) penetrating through saidbasemember (1); and
a fluid inlet connection port (3) and a fluid outlet connection port (4) both of which extend outward in opposite directions from opposite sidewalls of said base member (1) and are communicated with said main fluid passage (2).

10. The fluid pressure regulator as set forth in claim 9, wherein said fluid pressure measurement portion (6) is connected with said port (27) through a tube (28).

11. The fluid pressure regulator as set forth in claim 9, wherein said fluid pressure measurement portion (6) is constructed of a fluid pressure gauge.

12. The fluid pressure regulator as set forth in claim 9, wherein said fluid pressure measurement portion (6) is constructed of a fluid pressure sensor.

13. The fluid pressure regulator as set forth in claim 9, wherein said branched fluid passage (7) is smaller in diameter than said main fluid passage (2).

14. The fluid pressure regulator as set forth in claim 1, wherein said fluid pressure regulator portion (5) is manually operated.

15. The fluid pressure regulator as set forth in claim 9, wherein said fluid pressure regulator portion (5) is mechanically operated.
